# EUROPEAN PATENT SPECIFICATION

(11) **EP 0 637 280 B1**
(45) Date of publication and mention of the grant of the patent: **11.09.1996**
(21) Application number: 93909618.6
(22) Date of filing: 23.04.1993
(51) Int. Cl.: B29C 65/00, B29C 65/50, B29C 65/34, B29C 65/20, F16C 3/02

(54) **BONDING OF THERMOPLASTIC AND THERMOSET COMPOSITE STRUCTURES TO METALLIC STRUCTURES**
VERBINDEN VON THERMOPLASTISCHEN UND WÄRMEHÄRTENDEN VERBUNDSTRUKTUREN MIT METALLISCHEN STRUKTUREN
LIAISON DE STRUCTURES COMPOSITES THERMOPLASTIQUES ET THERMODURCIES SUR DES STRUCTURES METALLIQUES

(30) Priority: 24.04.1992 US 873721; 24.04.1992 US 873902
(43) Date of publication of application: 08.02.1995
(73) Proprietor: UNITED TECHNOLOGIES CORPORATION, Stratford, CT 06601-1381 (US)
(72) Inventor: MCINTYRE, Allen, J., Ansonia, CT 06401 (US); DAVIS, Geoffrey, C., Madison, CT 06443 (US)
(74) Representative: Klunker . Schmitt-Nilson . Hirsch
(86) International application number: US9303865
(87) International publication number: WO9322127

(56) References cited:
- EP-A- 0 246 059
- EP-A- 0 412 372
- EP-A- 0 491 645
- EP-A- 0 511 843
- DE-A- 3 331 789
- FR-A- 2 663 696

## Description

### Technical Field

This invention relates to methods of bonding thermoplastic and thermoset composite structures to metallic structures, and more particularly to a composite to metal bond that will transmit axial and torsional loads between the metallic structure and the composite structure.

### Background of the Invention

Thermoplastic and thermoset composite materials have received widespread use as structural elements. Such composite materials produce lightweight structures having relatively high strength characteristics. In addition, thermoplastic composite materials have the characteristic of being reshapeable because they can be repeatedly heated to the melting temperature of the material. In the aircraft industry, the use of thermoplastic and thermoset composite materials can produce significant weight savings and provide ease of replacement and repair.

While the uses for structural elements made from thermoplastic and thermoset composite materials are expanding, some applications still require metallic structural members. One such application is the splined connection of a rotor shaft to a gas turbine engine of a helicopter. The splined connection fits within a complementary shaped recess and transfers rotational forces from the gas turbine engine to the shaft. Metallic splined connectors are preferred due to the difficulties in forming a composite splined shaft connector having sufficient strength to withstand the engine loads. In such applications, however, the shaft itself could be made from a thermoplastic or thermoset composite material which has a metallic fitting affixed thereto. The metallic fitting would connect the shaft to the engine.

A problem in mating thermoplastic or thermoset composite shafts with metallic fittings is the attachment between the fitting and the shaft. This attachment is required to transfer operational loads, both torsional and axial, between the two elements. Thermoplastic and thermoset composite materials do not fuse with metallic materials with sufficient strength to withstand operational loads. In addition, cured thermoset composite materials cannot be reheated to reverse the bond between the fitting and the shaft. Standard adhesives do not provide a bond of sufficient strength to withstand the torsional and axial loads that are transmitted from the fitting to the shaft.

One solution in the prior art is to mechanically connect the metallic fitting to the composite shaft. A connection of this type may use pins and/or flanges adapted to be bolted together. The pinned connections and/or flanged portions add to the complexity and difficulty of fabricating the composite structure. In addition, the mechanical connectors increase the weight and size of the shaft and fitting relative to a simple bonded shaft and fitting.

The above art notwithstanding, scientists and engineers under the direction of the owner of the instant invention are working to develop methods to bond metallic and thermoplastic and thermoset composite materials in a manner which will permit the transmission of axial and torsional loads through the bond.

### Disclosure of the Invention

According to the present invention, methods for bonding a metallic structure to a thermoplastic or thermoset composite structure include the steps of knurling the mating surface of the metallic structure, and molding a thermoplastic composite material over the knurled mating surface to produce a bonding surface. For thermoplastic composite structures, the bonding method further includes the steps of laying up laminates of thermoplastic composite material over the bonding surface, and fusing the bonding surface to the laminates.

For thermoset composite structures, the bonding method further includes steps to prepare the thermoset composite structure with a thermoplastic bonding surface. Preparation of the thermoset composite structure includes the steps of partially embedding a layer of dry fiber reinforcement into a layer of thermoplastic material, coating the exposed dry fiber with a thermoset resin, and co-curing the impregnated, exposed dry fiber of the thermoplastic material with the thermoset composite structure wherein the thermoplastic material forms the bonding surface for the thermoset composite structure. The bonding surfaces of the metallic structure and the thermoset composite structure are consolidated by applying heat and pressure to cause melting and fusing of the thermoplastic material forming the bonding surfaces of the thermoset composite structure and the metallic structure.

A principal feature of the present invention is the knurled mating surface of the metallic structure. Another feature is the layer of thermoplastic material molded over the knurled surface to form a bonding surface. A specific feature of one embodiment of the thermoplastic bonding method is the circumferentially recessed portion of the knurled surface. Another feature of this embodiment is the high tension overwrap. A specific feature of the thermoset bonding method is the resin impregnated exposed portion of the partially embedded dry fiber reinforcement layer fused into both the thermoset composite structure and the thermoplastic material. Another feature of the thermoset bonding method is the utilization of a resistance heating element sandwiched between the bonding surfaces of the thermoset composite structure and the metallic structure.

Further embodiments of the invention are defined in the dependent claims.

The foregoing and other objects, features, and advantages of the present invention will become more apparent in light of the following detailed description of the exemplary embodiments thereof, as illustrated in the accompanying drawings.

### Brief Description of the Drawings

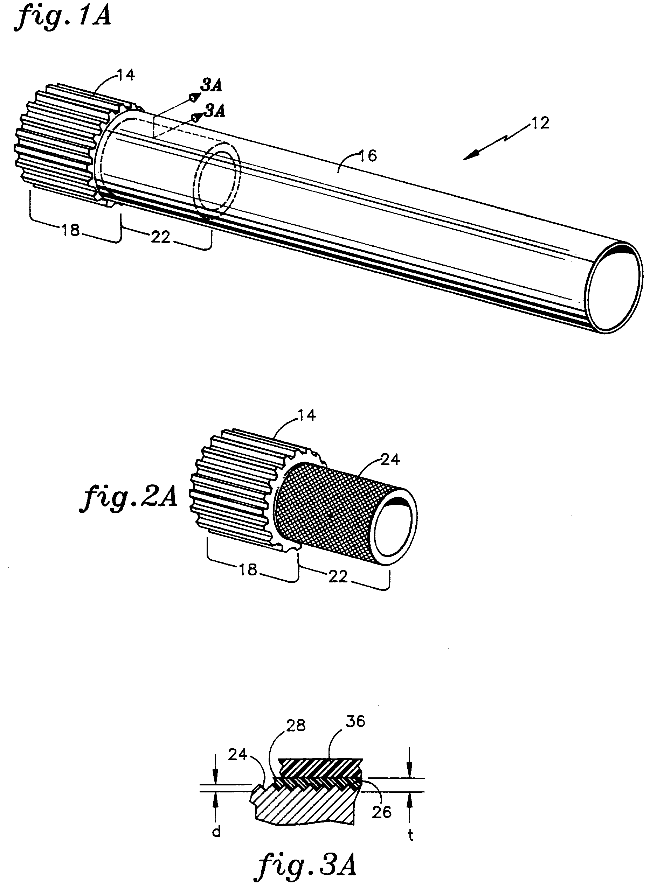

Figure 1A is a perspective view of a drive assembly comprising a metallic fitting having a thermoplastic composite shaft bonded thereto.

Figure 1A is a partially sectioned perspective view of a drive assembly comprising a metallic fitting having a thermoset composite shaft bonded thereto.

Figure 2A is a perspective view of the metallic fitting of Figure 1A illustrating the knurled mating surface thereof.

Figure 2B is a perspective view of the metallic fitting of Figure 1B illustrating the knurled mating surface thereof.

Figure 3A is a sectioned view taken along line 3A-3A of Figure 1A showing the metallic fitting with a bonding surface formed by molding a layer of thermoplastic material to the knurled mating surface.

Figure 3B is a sectioned view taken along line 3B-3B of Figure 1B showing the metallic fitting with a bonding surface formed by molding a layer of thermoplastic material to the knurled mating surface.

Figure 4 is a perspective view of the metallic fitting of Figure 2B with a layer of thermoplastic material molded over the knurled mating surface thereof.

Figure 5 is a perspective view of the prepared metallic fitting of Figure 2A with a mandrel attached thereto.

Figure 6 is a perspective view of the metallic fitting of Figure 5 subsequent to the lay up of laminates of thermoplastic composite material over the bonding surface thereof and the mandrel.

Figure 7 is a partially sectioned view of a thermoset composite structure showing a bonding surface formed of thermoplastic material and dry fiber reinforcement.

Figure 8 is a perspective view of a thermoplastic cone having a layer of dry fiber reinforcement partially embedded therein.

Figure 9 is a perspective view of a resistance heating element.

Figure 10 is a perspective view of the prepared metallic fitting of Figure 4 with the resistance heating element of Figure 9 placed on the bonding surface thereof.

Figure 11 is a perspective view of a drive assembly having a metallic fitting bonded to a thermoplastic composite shaft, wherein the drive assembly includes a high tension overwrap clamping the thermoplastic composite shaft to the mating surface.

Figure 12 is a perspective view of the metallic fitting of Figure 11 which includes a knurled mating surface having a circumferentially recessed portion.

Figure 13 is a sectioned view taken along line 13-13 of Figure 11 showing the metallic fitting with a layer of thermoplastic material molded over the mating surface and the high tension overwrap.

### Modes for Carrying Out the Invention

The present invention is directed to methods for bonding thermoplastic and thermoset composite structures to metallic structures or fittings. Figures 1A, 1B illustrate a drive assembly 12 wherein a metallic fitting 14 is bonded to a hollow composite shaft 16. The metallic fitting 14 includes a splined portion 18 and a mating surface 22, as illustrated in Figures 2A, 2B. The splined portion 18 is configured to be engaged with a force transmitting element (not shown), such as a gas turbine engine. During operation, the gas turbine engine will transmit rotational loads to the splined portion 18 of the fitting 14. The rotational loads are then transmitted to the composite shaft 16 through the bonded engagement between the mating surface 22 of the fitting 14 and the composite shaft 16, as described in further detail hereinbelow. Additionally, longitudinal loads may also be transmitted between the shaft 16 and the fitting 14. The bond between the metallic fitting 14 and the composite shaft 16 must be of sufficient strength to transmit both the rotational and longitudinal loads.

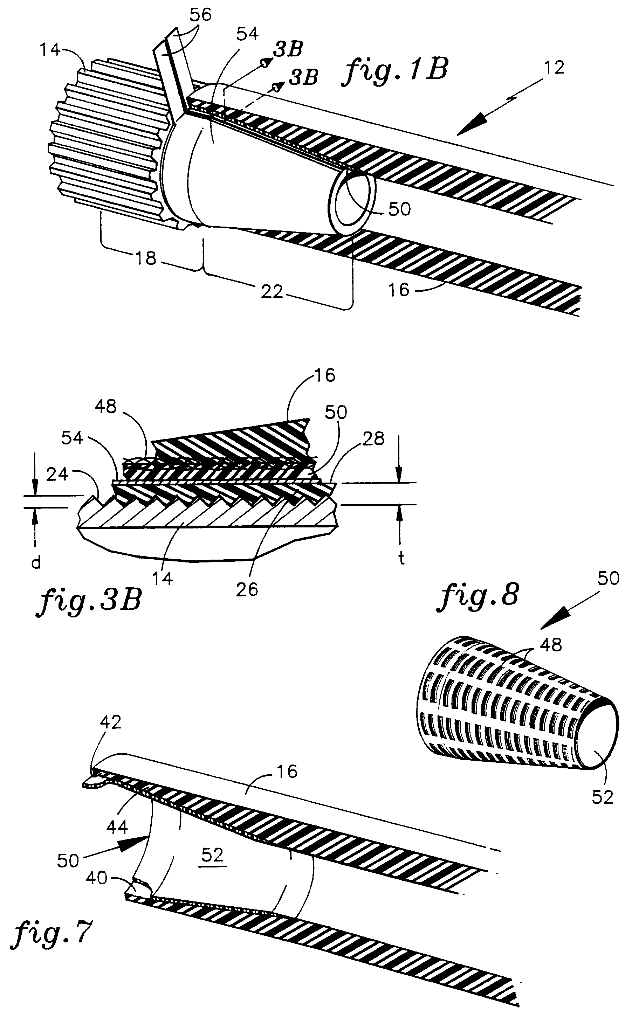

The initial steps of the bonding methods according to the present invention involve preparation of the metallic structure, e.g., the metallic fitting 14. The mating surface 22 of the metallic fitting 14 is knurled by conventional techniques, as identified in Figures 2A, 2B by reference numeral 24, to prepare the metallic fitting 14 for bonding. The knurls 24 may be random, helical, or a combination of axial and circumferentially directed knurls. The precise pattern and depth d (see Figures 3A, 3B) of the knurls 24 depends on the forces to be transmitted between the metallic fitting 14 and the composite shaft 16 and the area of the mating surface 22. In general, the greater the area of the mating surface 22, the smaller the depth d of the knurls 24 may be.

A random pattern of knurling is generally acceptable for typical operational loads. Although a randomly orientated knurling is discussed, an orientated configuration of knurls may be used to optimize the load transmission in specific applications.

Next, a layer of thermoplastic material 26 is molded over the knurled mating surface 22/24 as illustrated in Figure 4 (see also Figures 3A, 3B), the exposed surface of the thermoplastic material layer 26 forming a bonding surface 28 over the knurled mating surface 22/24 of the metallic fitting 14. The thermoplastic material utilized may be a short fiber reinforced thermoplastic material or an unreinforced thermoplastic material. Reinforced thermoplastic may be required in high load applications. During the molding step, the thermoplastic material 26 penetrates into and around the knurls 24 of the mating surface 22. The layer of thermoplastic material 26 should be of sufficient thickness t (see Figures 3A, 3B) to penetrate into and completely cover the knurls 24 of the mating surface 22. This ensures that a mechanical lock exists between the layer of thermoplastic material 26 and the knurled mating surface 22/24.

To bond a thermoplastic composite structure such as the thermoplastic composite shaft 16 of Figure 1A to the metallic fitting 14 utilizing one method according to the present invention, a mandrel 32 is engaged with the prepared metallic fitting 14, as shown in Figure 5. The mandrel 32 includes a support surface 34 for the laying up of laminates of thermoplastic composite material. Although a mandrel is shown in Figure 5, other means of supporting the laminates during lay-up may be used. In some applications, such as bonding a solid (non-hollow) thermoplastic composite structure to a metallic structure, a means of supporting the laminate lay-ups may not be necessary.

The next step is to lay up laminates 36 of thermoplastic composite material over the bonding surface 28 of the metallic fitting 14 (see Figure 3A) and the support surface 34 of the mandrel 32. The lay up of laminates 36 is repeated until the desired thickness of the thermoplastic composite material is obtained, as shown in Figure 6. The desired thickness will depend upon the application and the specific characteristics of the thermoplastic composite material used.

The final step is to consolidate the laminate lay-ups 36, in a manner suitable for the thermoplastic composite material, with the thermoplastic material layer 26 molded to the metallic fitting 14. As is well known, consolidation typically entails the application of heat and pressure to the laminate lay-ups 36 to form the thermoplastic composite shaft 16 and to bond the laminate lay-ups 36 to the thermoplastic material layer 26. After consolidation, the mandrel 32 may be removed and the hollow, thermoplastic composite shaft 16 is bonded to the thermoplastic layer 26 of the metallic fitting 14 to form the drive assembly 12 illustrated in Figure 1A.

To bond a thermoset composite structure such as the thermoset composite shaft 16 of Figure 1B to the metallic fitting 14 utilizing another bonding method according to the present invention, the thermoset composite shaft 16 must first be provided with a suitable bonding surface. As illustrated in Figure 2B, the mating surface 22 of the metallic fitting 14 has a frustoconical shape. An examination of Figure 1B illustrates that the end of the thermoset composite shaft 16 to be bonded to the metallic fitting 14 has a mating surface that is complementary to the shape of the mating surface 22. With reference to Figure 7, the thermoset composite shaft 16 has a mating surface 40 that includes a short cylindrical portion 42 and a relatively longer frustoconical portion 44.

The first step in producing the bonding surface for the thermoset composite shaft 16 requires that a layer of dry fiber reinforcement 48 be partially embedded into a thermoplastic cone 50 (see Figures 3B, 8). The thermoplastic cone 50 has a configuration that is complementary to the mating surface 40 of the thermoset composite shaft 16. The dry fiber reinforcement layer 48 is embedded into the outer surface of the thermoplastic cone 50 in such manner as to produce an embedded portion and an exposed portion as exemplarily illustrated in Figure 8.

Fabrication of the thermoplastic cone 50 having the dry fiber reinforcement layer 48 partially embedded therein may be achieved by various procedures. One procedure involves weaving commingled strands of thermoplastic material and dry fiber reinforcement with strands of dry fiber reinforcement. The commingled strands, in turn, are formed by intimately consolidating strands of dry fiber reinforcement with spun thermoplastic filaments. Strands of dry fiber reinforcement are then woven together with the commingled strands to form a woven material which is predominantly dry fiber reinforcement on one side and commingled strands on the other side. An alternate procedure is to weave strands of dry fiber reinforcement with spun thermoplastic filaments to produce a woven material that is predominantly dry fiber reinforcement on one side and thermoplastic filaments on the other side.

A further alternative procedure for fabricating the thermoplastic cone 50 having the dry fiber reinforcement layer 48 partially embedded therein is as follows. First, a layer of semi-crystalline thermoplastic material and a layer of amorphous thermoplastic material are intimately fused together. The semi-crystalline thermoplastic material has a higher melting temperature than the amorphous thermoplastic material. The layer of amorphous thermoplastic material is thinner than the layer of dry fiber reinforcement. Next, the layer of dry fiber reinforcement is pressed onto the layer of amorphous thermoplastic material, and the fused layers of thermoplastic material are heated to melt the amorphous thermoplastic material, but not the semi-crystalline thermoplastic material. In this way, the fiber reinforcement layer is embedded in the amorphous thermoplastic layer, the layer of semi-crystalline material providing a barrier to prevent complete embedment of the layer of dry fiber reinforcement. Although the three procedures described above are suggested as possible ways of partially embedding the dry fiber reinforcement layer 48 into the thermoplastic cone 50, it should be understood that various other procedures may also be used.

The next step in the preparation of the bonding surface is to coat the exposed portion of the dry fiber reinforcement layer 48 with a thermoset resin that is compatible with the thermoset composite shaft 16. The coated exposed portion of the dry fiber reinforcement layer 48 is then engaged with the mating surface 40 of the uncured thermoset composite shaft 16. Subsequent to engagement, the thermoset composite shaft 16 and the thermoplastic cone 50 with the dry fiber reinforcement layer 48 partially embedded therein are co-cured.

As a result of co-curing, the coated exposed portion of the dry fiber reinforcement layer 48 is bonded to the cured thermoset composite shaft 16. Since the dry fiber reinforcement layer 48 is partially embedded in the thermoplastic cone 50, the cone 50 forms an integral part of the thermoset composite shaft 16, as illustrated in Figure 7 (see also Figure 3B), after co-curing. The inner surface of the thermoplastic cone 50 comprises the bonding surface 52 of the thermoset composite shaft 16, as illustrated in Figure 7.

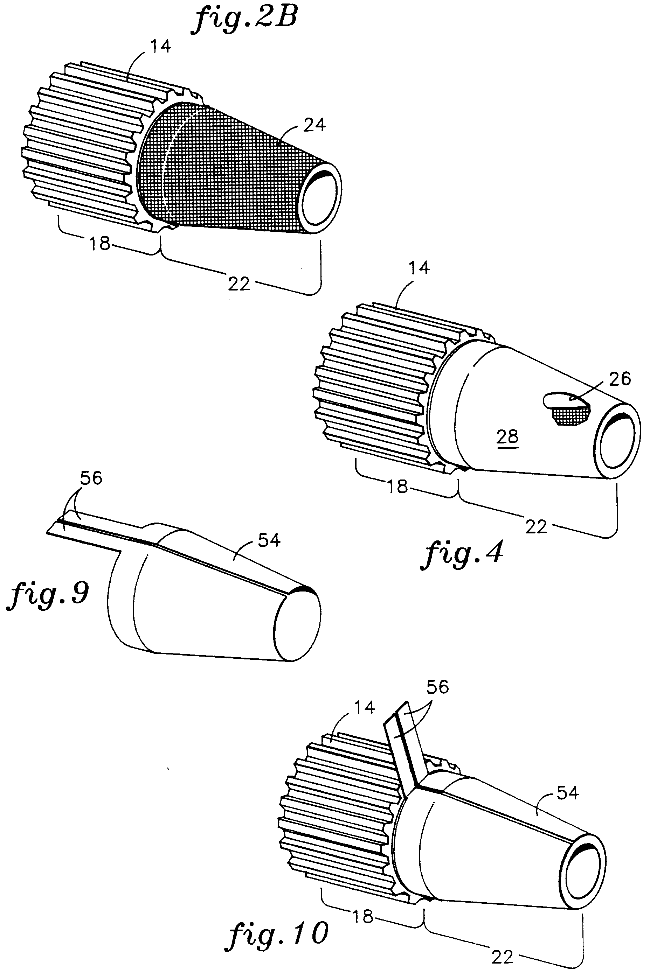

Once the thermoset composite shaft 16 has been provided with the bonding surface 52, a resistance heating element 54, as exemplarily illustrated in Figure 9, is placed over the bonding surface 28 of the metallic fitting 14 as illustrated in Figure 10. The resistance heating element 54 includes electrical leads 56 which extend out from the bond layer. The electrical leads 56 are configured to be connected to a source of electrical energy (not shown).

The bonding surface 52 of the thermoset composite shaft 16 is then engaged with the metallic fitting 14 such that the resistance heating element 54 is sandwiched between the thermoplastic bonding surface 52 of the thermoset composite shaft 16 and the thermoplastic bonding surface 28 of the metallic fitting 14. An electrical current of sufficient strength to heat the resistance heating element 54 above the melting temperature of the thermoplastic material is passed through the heating element 54 concurrent with the application of pressure to the bond area.

A suggested procedure for applying pressure to structures such as those shown in Figure 1B is to apply an axial load to the thermoset composite shaft 16 and the metallic fitting 14. The conical shape of the bonding surfaces 28, 52 will provide a circumferential force component sufficient to provide adequate consolidation pressure. Other means to apply pressure may be used for structures having differently shaped bonding surfaces.

The heat produced by the resistance heating element 54 and the applied pressure consolidates the thermoplastic material comprising the respective bonding surfaces 28, 52, thereby forming a thermoplastic bond layer between the metallic fitting 14 and the thermoset composite shaft 16 to complete the bonding process according to the present invention. It should be noted that the heat generated by the resistance heating element should be sufficient to melt the thermoplastic material, but not sufficient to cause mechanical degradation of the cured thermoset composite shaft.

The resistance heating element may be left in place during use and may subsequently be used to reverse the bonding process. Reversing the bonding process will require passing an electrical current through the resistance heating element to remelt the thermoplastic material within the bond layer. Once melted, the metallic fixture can be separated from the thermoset composite shaft. Reversing the bonding process permits replacement of either the metallic fitting or the thermoset composite shaft as necessary.

The resistance heating element provides a means to heat the bond layer to effectuate the consolidation of the layers of thermoplastic material and to reverse the consolidation. The resistance heating element may be chosen from a variety of electrically conductive elements including pierced and stretched foils, etched foils, stamped elements, and wound wire serpentine. The resistance heating element selected should be functional to heat the bonding surfaces in a substantially uniform manner. Uniform heating will minimize the occurrence of hot spots and/or cold spots during the bonding process which may degrade the quality of the bond. Although an embedded resistance heating element is shown and suggested as a convenient means to heat the bonding surfaces, other means of heating, such as induction heating, may be used.

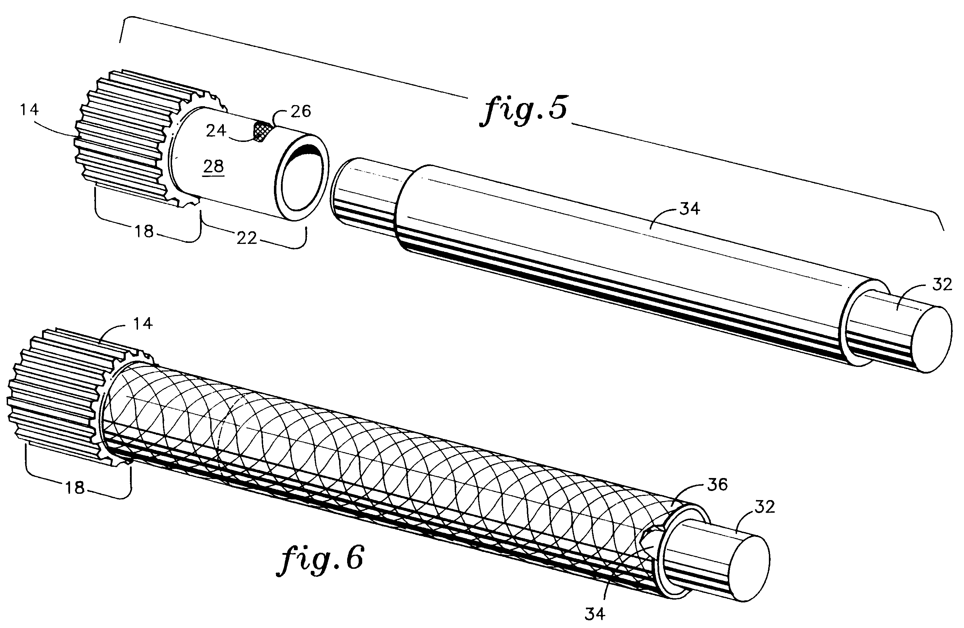

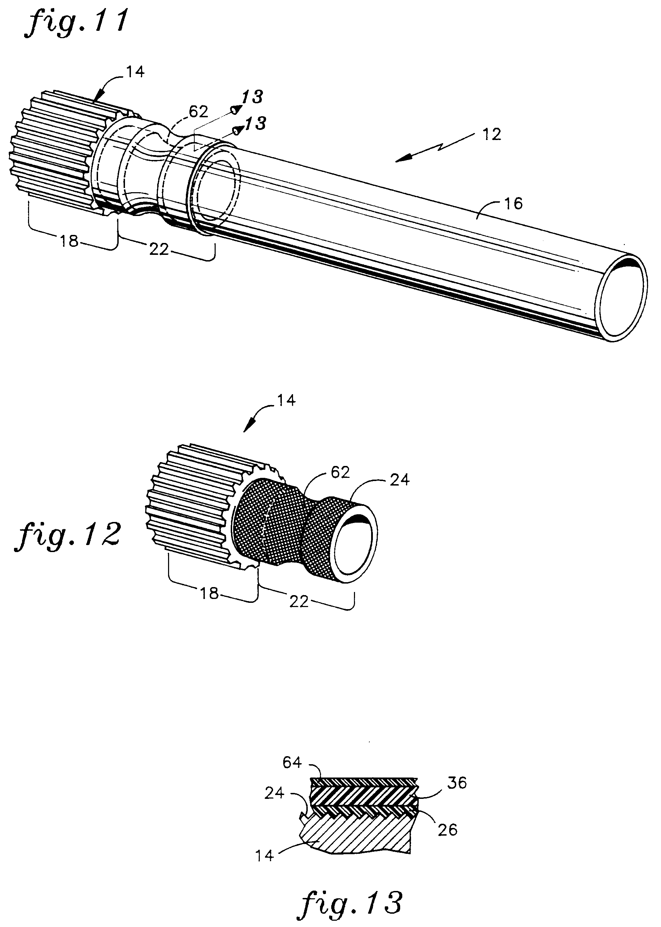

Figure 11 illustrates a drive assembly 12 wherein a metallic fitting 14 of alternative configuration is bonded to a composite shaft 16 utilizing another embodiment of the bonding method according to the present invention. The metallic fitting 14 is illustrated in further detail in Figure 12 and includes the splined portion 18 and the mating surface 22 having knurls 24 formed therein as described hereinabove. In addition, the mating surface 22 of the fitting 14 of Figure 12 includes a circumferentially recessed portion 62 which is radially offset to provide an additional mechanical lock between the metallic fitting 14 and the composite shaft 16.

The metallic fitting 14 having the circumferentially recessed portion 62 may be bonded to the thermoplastic composite shaft 16 utilizing the bonding method described hereinabove. Subsequent to the consolidation step, which bonds the thermoplastic composite shaft 16 to the layer of thermoplastic material 26 molded to the knurled mating surface 22/24 of the metallic fitting 14, a high tension overwrap 64 is placed around the thermoplastic composite shaft 16 in the vicinity of the recessed portion 62 of the metallic fitting 14. The high tension overwrap 64 functions to clamp the thermoplastic composite material into the recessed portion 62 and down into the knurled mating surface 22/24. The high tension overwrap may formed from a variety of high tensile strength materials. A suggested material is fiberglass.

Although the invention has been shown and described with respect to exemplary embodiments thereof, it should be understood by those skilled in the art that various changes, omissions, and/or additions may be made therein and thereto, without departing from the spirit and scope of the invention.

## Claims

1. A method for bonding a metallic structure (14) having a mating surface (22) to a composite structure (16) characterized by the steps of
knurling the mating surface (22) of the metallic structure (14);
molding a layer of thermoplastic material (26) over the knurled mating surface (22/24) to produce a bonding surface (28); and
consolidating the composite structure (16) with the bonding surface (28) of the metallic structure (14).

2. The method according to claim 1 characterized in that the composite structure (14) is a thermoplastic composite structure (14) and the consolidating step comprises the steps of
engaging a mandrel (32) having a support surface (34) with the metallic structure (14);
laying up laminates (36) forming the thermoplastic composite structure (16) over the bonding surface (28) of the metallic structure (14) and the support surface (34) of the mandrel (32); and
applying heat and pressure to fuse the layed-up laminates (36) to the layer of thermoplastic material (26) molded to the knurled mating surface (22/24) of the metallic fitting (14) to form the thermoplastic composite structure (16).

3. The method according to claim 1 characterized by the step of wrapping a high tension overwrap (64) around the consolidated composite structure (16) to clamp the composite structure (16) to the metallic fitting (14).

4. The method according to claim 1 characterized in that the composite structure (16) is an uncured thermoset composite structure (16) and the consolidating step comprises the steps of
partially embedding a layer of dry fiber reinforcement (48) into a thermoplastic structure (50) having a configuration complementary to the knurled mating surface (22/24) of the metallic structure (14) to produce an embedded portion and an exposed portion of dry fiber reinforcement (48) in the thermoplastic structure (50);
coating the exposed portion of dry fiber reinforcement (48) with a thermoset composite resin;
engaging the resin-coated exposed portion of dry fiber reinforcement (48) with a mating surface (40) of the uncured thermoset composite structure (16);
curing the uncured thermoset composite structure (16) and engaged, resin-coated exposed portion of dry fiber reinforcement (48) wherein the thermoplastic structure (50) provides a bonding surface (52) for the cured thermoset composite structure (16/50);
engaging the bonding surface (52) of the cured thermoset composite structure (16/50) with the bonding surface (28) of the metallic structure (16); and
applying heat and pressure to fuse the engaged bonding surfaces (28, 52) of the metallic structure (14) and the cured thermoset composite structure (16/50).

5. The method of claim 4 further characterized in that the engaging step comprises the step of placing a resistance heating element (54) between the bonding surface (52) of the cured thermoset composite structure (16/50) and the bonding surface (28) of the metallic structure (14), and wherein the applying step comprises the step of passing an electrical current through the resistance heating element (54) to generate heat to melt the thermoplastic material (26, 50) forming the bonding surfaces (28, 52) of the metallic structure (14) and the cured thermoset composite structure (16/50) wherein the bonding surfaces (28, 52) are fused together.

6. A drive assembly (12) for transmitting forces from a force transmitting element to a driven element comprising
a metallic fitting (14) having means (18) for engaging the force transmitting element; and
a composite shaft (16);
characterized in that the metallic fitting (24) includes a knurled mating surface (22/24);
the composite shaft (16) includes a bonding surface; and
a layer of thermoplastic material (26) molded into the knurled mating surface (22/24) of the metallic fitting (14), the molded layer of the thermoplastic material (26) defining a bonding surface (28) for the metallic fitting (14);
the bonding surface of the composite shaft (16) being consolidated with the bonding surface (28) of the metallic fitting (14) by application of heat and pressure.

7. The drive assembly (12) of claim 6 characterized in that the knurled mating surface (22/24) of the metallic fitting (14) includes a circumferentially recessed portion (62).

8. The drive assembly (12) of claim 7 characterized in that a high tension overwrap (64) is placed around the composite shaft (16) superjacent the circumferentially recessed portion (62) of the metallic fitting (14) to clamp the composite shaft (16) to the knurled mating surface (22/24) of the metallic fitting (14).

9. The drive assembly (12) of claim 6 characterized in that the composite shaft (16) is a thermoset composite shaft (16) and the bonding surface (52) of the thermoset composite shaft (16) comprises a thermoplastic structure (50) having a layer of dry fiber reinforcement (48) partially embedded therein, an exposed portion of the dry fiber reinforcement (48) being coated with a thermoset composite resin and cured in combination with the thermoset composite shaft (16) such that the thermoplastic structure (50) cured to the thermoset composite shaft (16) defines the bonding surface (52) thereof

10. The drive assembly (12) of claim 9 characterized by a resistance heating clement (54) interposed between the bonding surface (52) of the thermoset composite shaft (16) and the bonding surface (28) of the metallic fitting (14).

## Patentansprüche

1. Ein Verfahren zum Verbinden eines eine Gegenfläche (22) aufweisenden metallischen Bauteils (14) mit einem Bauteil (16) aus einem Verbundwerkstoff,
**gekennzeichnet durch** die Schritte:
Rändeln der Gegenfläche (22) des metallischen Bauteils (14);
Formen einer Schicht aus thermoplastischem Material (26) auf die gerändelte Gegenfläche (22/24), um eine Verbindungsfläche (28) zu erzeugen; und
Vereinigen des Bauteils (16) aus Verbundwerkstoff mit der Verbindungsfläche (28) des metallischen Bauteils (14).

2. Das Verfahren gemäß Anspruch 1,
**dadurch gekennzeichnet,**
daß das Bauteil (14) aus Verbundwerkstoff ein Bauteil (14) aus einem thermoplastischen Verbundwerkstoff ist und daß der Schritt des Vereinigens die Schritte aufweist:
Ineingriffbringen eines Domes (32), der eine Tragfläche (34) aufweist, mit dem metallischen Bauteil (14);
Auflegen von Laminaten (36), welche das Bauteil (16) aus thermoplastischem Verbundwerkstoff bilden, auf die Verbindungsfläche (28) des metallischen Bauteils (14) und die Tragflache (34) des Domes (32); und
Anwenden von Wärme und Druck zum Verschmelzen der aufgelegten Laminate (36) mit der auf die gerändelte Gegenfläche (22/24) des metallischen Anschlußteils (14) geformten Schicht aus thermoplastischem Material (26), um das Bauteil (16) aus thermoplastischem Verbundwerkstoff zu bilden.

3. Das Verfahren gemäß Anspruch 1,
**gekennzeichnet durch**
den Schritt des Umhüllens des vereinigten Bauteils (16) aus Verbundwerkstoff mit einer Umhüllung (64) hoher Zugfestigkeit, um das Bauteil (16) aus Verbundwerkstoff an dem metallischen Anschlußteil (14) zu befestigen.

4. Das Verfahren gemäß Anspruch 1,
**dadurch gekennzeichnet,**
daß das Bauteil (16) aus Verbundwerkstoff ein Bauteil (16) aus einem ungehärteten wärmehärtbaren Verbundwerkstoff ist und daß der Vereinigungsschritt die Schritte aufweist:
Teilweises Einbetten einer Schicht aus einer Trockenfaserverstärkung (48) in ein thermoplastisches Bauteil (50) mit einer zu der gerändelten Gegenfläche (22/24) des metallischen Bauteils (14) komplementären Konfiguration, um einen eingebetteten Bereich und einen freiliegenden Bereich der Trockenfaserverstärkung (48) in dem thermoplastischen Bauteil (50) zu erzeugen;
Beschichten des freitiegenden Bereichs der Trockenfaserverstärkung (48) mit einem wärmehärtbaren Verbundharz;
Zusammenbringen des harzbeschichteten, freiliegenden Bereichs der Trockenfaserverstärkung (48) mit einer Gegenfläche (40) des Bauteils (16) aus ungehärtetem wärmehärtbaren Verbundwerkstoff;
Härten des Bauteils (16) aus ungehärtetem wärmehärtbaren Verbundwerkstoff und des damit zusammengebrachten, harzbeschichteten, freiliegenden Bereichs der Trockenfaserverstärkung (48), wobei das thermoplastische Bauteil (50) eine Verbindungsfläche (52) für das Bauteil (16/50) aus dem gehärteten wärmehärtbaren Verbundwerkstoff ergibt;
Zusammenbringen der Verbindungsfläche (52) des Bauteils (16/50) aus dem gehärteten wärmehärtbaren Verbundwerkstoff mit der Verbindungsfläche (28) des metallischen Bauteils (16); und
Anwenden von Wärme und Druck, um die zusammengebrachten Verbindungsflächen (28, 52) des metallischen Bauteils (14) und des Bauteils (16/50) aus dem gehärteten wärmehärtbaren Verbundwerkstoff zu verschmelzen.

5. Das Verfahren gemäß Anspruch 4, ferner
**dadurch gekennzeichnet,**
daß der Schritt des Zusammenbringens den Schritt des Anordnens eines Widerstandserhitzungselements (54) zwischen die Verbindungsfläche (52) des Bauteils (16/50) aus dem gehärteten wärmehärtbaren Verbundwerkstoff und die Verbindungsfläche (28) des metallischen Bauteils (14) aufweist und der Schritt des Anwendens den Schritt des Leitens eines elektrischen Stromes durch das Widerstandserhitzungselement (54) aufweist, um Wärme zu erzeugen, um das thermoplastische Material (26, 50) zu schmelzen, welches die Verbindungsflächen (28, 52) des metallischen Bauteils (14) und des Bauteils (16/50) aus dem gehärteten wärmehärtbaren Verbundwerkstoff bildet, wobei die Verbindungsflächen (28, 52) miteinander verschmolzen werden.

6. Eine Antriebsanordnung (12) zum Übertragen von Kräften von einem Kraftübertragungselement zu einem angetriebenen Element, wobei die Antriebsanordnung (12) aufweist:
ein metallisches Anschlußteil (14) mit einer Einrichtung (18) zum Ineingriffbringen mit dem Kraftübertragungselement;
eine Welle (16) aus Verbundwerkstoff;
**dadurch gekennzeichnet,**
daß das metallische Anschlußteil (24) eine gerändelte Gegenfläche (22/24) aufweist;
die Welle (16) aus Verbundwerkstoff eine Verbindungsfläche aufweist; und
eine Schicht aus thermoplastischem Material (26) an die gerändelte Gegenfläche (22/24) des metallischen Anschlußteils (14) geformt ist, wobei die geformte Schicht aus thermoplastischem Material (26) eine Verbindungsfläche (28) für das metallische Anschlußteil (14) definiert;
wobei die Verbindungsfläche der Welle (16) aus Verbundwerkstoff mit der Verbindungsfläche (28) des metallischen Anschlußteils (14) durch Anwendung von Wärme und Druck vereinigt ist.

7. Die Antriebsanordnung (12) nach Anspruch 6,
**dadurch gekennzeichnet,**
daß die gerändelte Gegenfläche (22/24) des metallischen Anschlußteils (14) einen umlaufend vertieften Bereich (62) aufweist.

8. Die Antriebsanordnung (12) nach Anspruch 7,
**dadurch gekennzeichnet,**
daß eine Umhüllung (64) hoher Zugfestigkeit um die Welle (16) aus Verbundwerkstoff herum angeordnet ist, wobei die Umhüllung (64) auf dem umlaufend vertieften Bereich (62) des metallischen Anschlußteils (14) liegt, um die Welle (16) aus Verbundwerkstoff an der gerändelten Gegenfläche (22/24) des metallischen Anschlußteils (14) zu befestigen.

9. Die Antriebsanordnung (12) nach Anspruch 6,
**dadurch gekennzeichnet,**
daß die Welle (16) aus Verbundwerkstoff eine Welle (16) aus wärmehärtbarem Verbundwerkstoff ist und die Verbindungsfläche (52) der Welle (16) aus wärmehärtbarem Verbundwerkstoff ein thermoplastisches Bauteil (50) aufweist, das eine zum Teil hierin eingebettete Schicht aus Trockenfaserverstärkung (48) aufweist, wobei ein freiliegender Bereich der Trockenfaserverstärkung (48) mit einem wärmehärtbaren Verbundharz beschichtet und gemeinsam mit der Welle (16) aus wärmehärtbarem Verbundwerkstoff in der Weise gehärtet ist, daß das thermoplastische Bauteil (50), das an die Welle (16) aus wärmehärtbarem Verbundwerkstoff gehärtet ist, deren Verbindungsfläche (52) definiert.

10. Die Antriebsanordnung (12) nach Anspruch 9,
**gekennzeichnet durch**
ein Widerstandserhitzungselement (54), das zwischen der Verbindungsfläche (52) der Welle (16) aus wärmehärtbarem Verbundwerkstoff und der Verbindungsfläche (28) des metallischen Anschlußteils (14) angeordnet ist.

## Revendications

1. Procédé pour lier une structure métallique (14) ayant une surface de contact (22) à une structure composite (16) caractérisé par les étapes
de moleter la surface de contact (22) de la structure métallique (14),
de mouler une couche de matériau thermoplastique (26) sur la surface de contact moletée (22/24) pour obtenir une surface de liaison (28); et
d'unir la structure composite (16) avec la surface de liaison (28) de la structure métallique (14).

2. Procédé selon la revendication 1 caractérisé en ce que la structure composite (14) est une structure composite thermoplastique (14) et l'étape d'union comprend les étapes
d'engager un mandrin (32) ayant une surface d'appui (34) avec la structure métallique;
de déposer des stratifiés (36) formant la structure composite thermoplastique (16) sur la surface de liaison (28) de la structure métallique (14) et la surface d'appui (34) du mandrin (32); et
d'appliquer de la chaleur et une pression pour fondre les stratifiés déposés (36) sur la couche de matériau thermoplastique (26) moulée sur la surface de contact moletée (22/24) du raccord métallique (14) pour former la structure composite thermoplastique (16).

3. Procédé selon la revendication 1 caractérisé par l'étape d'enrouler une enveloppe à haute résistance à la traction (64) autour de la structure composite unie (16) pour serrer la structure composite (16) sur le raccord métallique (14).

4. Procédé selon la revendication 1 caractérisé en ce que la structure composite (16) est une structure composite thermodurcissable non polymérisée (16) et l'étape d'union comprend les étapes:
d'encastrer partiellement une couche de renforcement en fibre sèche (48) dans une structure thermoplastique (50) ayant une configuration complémentaire à la surface de contact moletée (22/24) de la structure métallique (14) pour obtenir une partie encastrée et une partie exposée du renforcement en fibre sèche (48) dans la structure thermoplastique (50);
de recouvrir la partie exposée de renforcement en fibre sèche (48) d'une résine composite thermodurcissable;
d'engager la partie exposée revêtue de résine du renforcement en fibre sèche (48) avec une surface de contact (40) de la structure composite thermodurcissable non polymérisée (16);
de polymériser la structure composite thermodurcissable non polymérisée (16) et la partie exposée engagée revêtue de résine du renforcement en fibre sèche (48) dans laquelle la structure thermoplastique (50) fournit une surface de liaison (52) pour la structure composite thermodurcissable polymérisée (16/50);
d'engager la surface de liaison (52) de la structure composite thermodurcissable polymérisée (16/50) avec la surface de liaison (28) de la structure métallique (16); et
d'appliquer de la chaleur et une pression pour fondre les surfaces de liaison engagées (28, 52) de la structure métallique (14) et de la structure composite thermodurcissable polymérisée (16/50).

5. Le procédé de la revendication 4 caractérisé en outre en ce que l'étape d'engagement comprend l'étape de placer un élément thermorésistant (54) entre la surface de liaison (52) de la structure composite thermodurcissable polymérisée (16/50) et la surface de liaison (28) de la structure métallique (14), et dans laquelle l'étape d'application comprend l'étape de passer un courant électrique à travers l'élément thermorésistant (54) pour générer de la chaleur afin de fondre le matériau thermoplastique (26, 50) formant les surfaces de liaison (28, 52) de la structure métallique (14) et la structure composite thermodurcissable polymérisée (16/50) dans laquelle les surfaces de liaison (28/52) sont conjointement fondues.

6. Ensemble d'entraînement (12) pour transmettre des forces d'un élément de transmission de force à un élément mené comprenant
un raccord métallique (14) ayant des moyens (18) pour engager l'élément de transmission de force; et
un arbre en composite (16);
caractérisé en ce que le raccord métallique (24) comprend une surface de contact moletée (22/24);
l'arbre en composite (16) comprend une surface de liaison; et
une couche de matériau thermoplastique (26) moulée dans la surface de contact moletée (22/24) du raccord métallique (14), la couche moulée du matériau thermoplastique (26) définissant une surface de liaison (28) pour le raccord métallique (14);
la surface de liaison de l'arbre en composite (16) étant unie avec la surface de liaison (28) du raccord métallique (14) par application de chaleur et de pression.

7. Ensemble d'entraînement (12) selon la revendication 6 caractérisé en ce que la surface de contact moletée (22/24) du raccord métallique (14) comprend une partie circonférentiellement évidée (62).

8. Ensemble d'entraînement (12) selon la revendication 7 caractérisé en ce qu'une enveloppe à haute résistance à la traction (64) est placée autour de l'arbre composite (16) recouvrant la partie circonférentiellement évidée (62) du raccord métallique (14) pour serrer l'arbre en composite (16) sur la surface de contact moletée (22/24) du raccord métallique (14).

9. Ensemble d'entraînement (12) selon la revendication 6 caractérisé en ce que l'arbre en composite (16) est un arbre en composite thermodurcissable (16) et la surface de liaison (52) de l'arbre en composite thermodurcissable (16) comprend une structure thermoplastique (50) dans laquelle une couche de renforcement en fibre sèche (48) est partiellement encastrée, une partie exposée du renforcement en fibre sèche (48) étant revêtue d'une résine composite thermodurcissable et polymérisée en combinaison avec l'arbre en composite thermodurcissable (16) de telle sorte que la structure thermoplastique (50) polymérisée sur l'arbre en composite thermodurcissable (16) définisse sa surface de liaison (52).

10. Ensemble d'entraînement (12) de la revendication 9 caractérisé par un élément thermorésistant (54) interposé entre la surface de liaison (52) de l'arbre en composite thermodurcissable (16) et la surface de liaison (28) du raccord métallique (14).
